# EUROPEAN PATENT APPLICATION

(11) **EP 1 251 621 A2**
(43) Date of publication of application: **23.10.2002**
(21) Application number: 02252697.4
(22) Date of filing: 16.04.2002
(51) Int. Cl.: H02K 3/12

(54) **Electric motor armature**

(30) Priority: 17.04.2001 US 836892
(71) Applicant: Meritor Light Vehicle Technology, LLC, Troy, Michigan 48084 (US)
(72) Inventor: Kramer, Dennis, Troy, Michigan 48098 (US); Quere, Jerome, 14112 Bieville-Beauville (FR); Fowler, Craig Rae, Ontario N9C 2A9 (CA); Fin, Enrico, Lake Orion, Michigan 48359 (US); Chene, George, Sterling Heights, Michigan 48314 (US); Goldberg, Ira, Newbury Park, California 91320 (US); Chiu, Stephen, Thousand Oaks, California 91360 (US); Hopson, Charles, Lebanon, Tennessee 37087 (US); Garrido, Pascal, Kilworth, Ontario P0E 1G0 (CA); Barry, David, Stratford Upon Avon, Warwicksh. CV37 6DS (GB); Rogovin, Dan, Newbury Park, California 91320 (US)
(74) Representative: Jones, John Bryn

(57) **Abstract**

In the disclosed embodiment of this invention, sets of straight wire bundles (12) are molded or otherwise encased about a cylindrical rotor casing (11). The straight wire bundles lie parallel to the axis of the cylindrical rotor casing. This process is an alternative to a traditional type of electric motor armature which uses a wire that is coiled around the cylindrical rotor casing. Since the wire bundles are straight and not pulled from a single wire roll, breaking and stretching of the wire is greatly reduced. The straight wire bundles are connected at their ends using a circuit cap (14) to form a complete electrical circuit.

## Description

### BACKGROUND OF THE INVENTION

This invention relates to an electric motor armature and to an alternative approach to the production of electric motor armatures. A rotor casing is provided with a plurality of circumferentially spaced straight wire bundles.

Electric motors typically include a stator and a rotor, or armature. An electric current in the stator causes the rotor to rotate through a magnetic field.

Electric motor armatures typically include a cylindrical rotor around which copper wire is coiled. Winding the copper wire in coils around an electric motor rotor casing is a time consuming and expensive assembly operations.

Typically, the procedure requires holding the rotor casing and winding or wrapping the wire from a single copper wire roll. The single roll is used such that the entire coil is electrically connected. After the first coil is wound, the wire is cut. The rotor casing must then be repositioned, and the wire is wound again. This process is repeated up to a dozen times for each rotor. Since the wire is pulled from the wire coil, breakage and stretching is common

It would be desirable to provide a process for more efficiently manufacturing an electric motor armature with the same electrical characteristics as a traditional armature, but at a much cheaper cost.

### SUMMARY OF THE INVENTION

In a disclosed embodiment of this invention, an alternative process replaces each wire coil of the prior art electric motor armature with a plurality of circumferentially spaced straight bundles of wires. Since the wire bundles are straight and not pulled from a single copper wire roll, breaking and stretching of the wire is greatly reduced.

In the inventive process, sets of straight wire bundles are molded or otherwise encased around a rotor casing. The ends of the straight wire bundles are then electrically connected by way of a circuit cap. The circuit cap utilizes soldering pins or similar technology to function as connecting pins to connect each wire bundle. Each connecting pin corresponds to a connecting pin mate on the circuit cap. A plurality of PCB board-type circuits may be embedded within the circuit cap and connect each connecting pin to its corresponding connecting pin mate, thereby completing the electrical circuit. The end result is an electric motor armature with the same electrical characteristics as a traditional armature, but at a much cheaper manufacturing cost.

These and other features of the present invention can be understood from the following specification and drawings, the following of which is a brief description.

### BRIEF DESCRIPTION OF THE DRAWINGS

Figure 1 is a schematic view of the electric motor armature of the present invention.
Figure 2 is a schematic view of the connecting circuitry of the circuit cap of the present invention.

### DETAILED DESCRIPTION OF THE PREFERRED EMBODIMENT

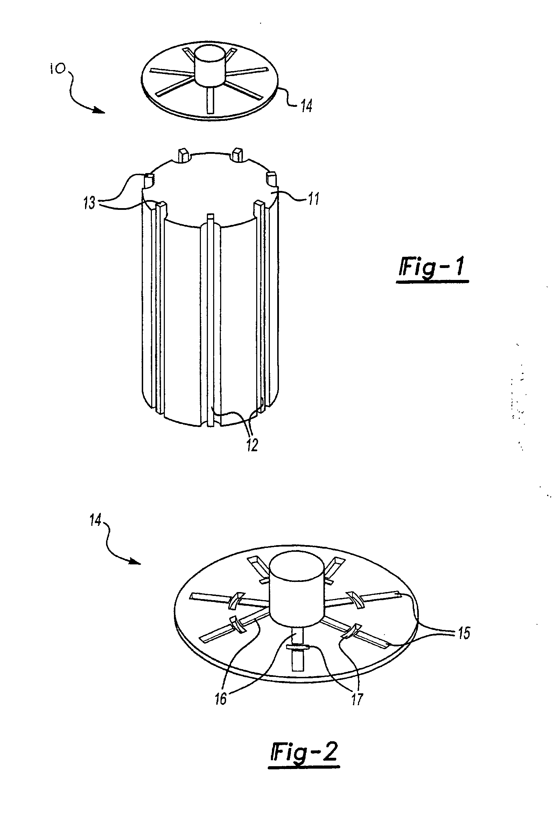

Figure 1 shows an electric motor armature 10 of the present invention including cylindrical rotor casing 11 and circumferentially spaced straight wire bundles 12. Straight wire bundles 12 are molded or otherwise encased circumferentially around rotor casing 11 and parallel to an axis that is defined by rotor casing 11. That is, the bundles preferably extend along what will be the rotational axis of the armature 10. Straight wire bundles 12 have end portions 13 that are connected by way of a circuit cap 14.

As shown schematically in Figure 2, circuit cap 14 uses connecting pins 15 to connect each wire. Note that connecting pins 15 may be soldering pins or similar technology know to one of ordinary skill in the art. Each connecting pin 15 corresponds to a connecting pin mate 16 on circuit cap 14.

A plurality of PCB board-type circuits 17 are embedded within the circuit cap 14 and connect each connecting pin 15 to its corresponding connecting pin mate 16, thereby forming a complete electrical circuit. Thus, an electric motor armature is produced with the same electrical properties as the traditional coiled wire armatures, but with increased efficiency and decreased cost.

A preferred embodiment of this invention has been disclosed. However, a worker of ordinary skill in this art would recognize that certain modifications would come within the scope of this invention. For that reason, the following claims should be studied to determine the true scope and content of this invention.

## Claims

1. An electric motor armature (10) comprising:
a cylindrical rotor casing (11);
a plurality of circumferentially spaced wire bundles (12) encased about the circumference of said rotor casing; and
a circuit cap (14) electrically connecting said wire bundles to each other.

2. An electric motor armature as recited in Claim 1 wherein said wire bundles are straight and have end portions (13).

3. An electric motor armature as recited in Claim 2 wherein said circuit cap connects said wire bundles to each other at one of said end portions.

4. An electric motor armature as recited in Claim 2 or 3 wherein said rotor casing defines an axis and said straight wire bundles lie parallel to said axis.

5. An electric motor armature as recited in any one of Claims 2 to 4 wherein said end portions each have a connecting pin (15);
said circuit cap has a plurality of corresponding connecting pin mates (16); and
each connecting pin mate is connected to a connecting pin using a PCB board-type circuit (17) embedded within said circuit cap to provide a complete electrical circuit.

6. An electric motor armature (10) comprising:
a cylindrical rotor casing (11);
a plurality of circumferentially spaced wire bundles (12) encased about the circumference of said rotor casing;
a circuit cap (14) to electrically connect said wire bundles (12) to each other;
wherein said wire bundles (12) are generally straight and have end portions (13),
said circuit cap (14) connects said wire bundles (12) to each other at one of said end portions;
said rotor casing defining an axis and said straight wire bundles lie generally parallel to said axis, said end portions each have a connecting pin, and said circuit cap has a plurality of corresponding connecting pin mates (16); and
each connecting pin mate (16) is connected to a connecting pin (15) using a PCB board-type circuit (17) embedded within said circuit cap to provide a complete electrical circuit.

7. A process for producing an electric motor armature (10) comprising:
embedding a plurality of straight bundles of wire (12) spaced about the circumference of a cylindrical rotor casing (11) so that said straight bundles lie parallel to an axis defined by said cylindrical rotor casing; and
electrically connecting said straight bundles of wire to form a complete electrical circuit.
